# EUROPÄISCHE PATENTSCHRIFT

(11) **EP 1 741 116 B1**
(45) Veröffentlichungstag und Bekanntmachung des Hinweises auf die Patenterteilung: **05.03.2008**
(21) Anmeldenummer: 05792546.3
(22) Anmeldetag: 20.09.2005
(51) Int. Cl.: H01H 13/702

(54) **TASTATUR UND VERFAHREN ZUR HERSTELLUNG EINER TASTATUR**
KEYBOARD AND METHOD FOR PRODUCING A KEYBOARD
CLAVIER ET SON PROCEDE DE PRODUCTION

(30) Priorität: 17.01.2005 DE 102005002149
(43) Veröffentlichungstag der Anmeldung: 10.01.2007
(73) Patentinhaber: Printed Systems GmbH, 09120 Chemnitz (DE)
(72) Erfinder: HÜBLER, Arved, 09111 Chemnitz (DE); FRANZ, Thoralt, 09376 Oelsnitz (DE); ZILLGER, Tino, 09126 Oelsnitz (DE)
(74) Vertreter: Tetzner, Michael
(86) Internationale Anmeldenummer: PCT/EP2005/010149
(87) Internationale Veröffentlichungsnummer: WO 2006/074711

(56) Entgegenhaltungen:
- EP-A- 0 727 796
- DE-A1- 3 413 407
- DE-U1- 20 300 611
- GB-A- 2 333 401
- US-A- 4 264 477
- US-A- 4 391 845
- US-A- 5 680 160
- US-A1- 2003 041 443

## Beschreibung

Die Erfindung betrifft eine Tastatur sowie ein Verfahren zur Herstellung einer Tastatur zum Auslösen von elektrischen Schaltfunktionen mit einem eine erste elektrische Kontaktstruktur aufweisenden ersten Substrat, einem eine zweite elektrische Kontaktstruktur aufweisenden zweiten Substrat sowie einer Zwischenschicht, welche die beiden Kontaktstrukturen auf Abstand hält und bei Druckausübung an vorgegebenen Bereichen der Tastatur einen Kontakt der beiden Kontaktstrukturen an vorgegebenen Stellen ermöglicht.

Elektrische Tastaturen sind meistens in Ausführungen bekannt, in denen einzelne, beweglich gelagerte Tasten mechanisch einen elektrischen Kontakt schließen oder öffnen. Daneben sind sogenannte Folientastaturen bekannt, bei denen ein elektrischer Kontakt dadurch hergestellt wird, dass die zwei Folien mit jeweils einer elektrischen Kontaktstruktur, häufig in einer Matrixanordnung aufeinanderliegen, wobei durch eine isolierende Zwischenfolie ein Abstand zwischen den beiden Folien eingehalten wird. In der Zwischenschicht sind Aussparungen ausgestanzt, so dass an diesen Stellen bei externem Druck ein elektrischer Kontakt zwischen den beiden Leitern der äußeren Folien entsteht. Die Leitstrukturen auf den äußeren Folienbahnen werden heute galvanisch aus Kupfer oder durch Aufdampfen von Metall oder durch Ätzprozesse auf einer Folie mit Metalloberfläche hergestellt.

Aufgrund der Verschiedenheit der Prozesse ist heute nur eine langsame und nicht verkettete Fertigung möglich.

Aus der DE-C-34 34 664 ist eine Tastatur-Folienschaltung bekannt, bei der die Leiterbahnen mittels Siebdruck von Silberleitpasten hergestellt werden.

Die US-A-6 043 441 offenbart einen Folienschalter, dessen elektrische Kontakte auf einer oberen und einer unteren Folie mittels Silberleitpaste aufgebracht sind, wobei zwischen den beiden Folien eine Isolierpaste aufgetragen ist.

In der EP-A-0 727 796 wird ferner eine Tastatur zum Auslösen von elektrischen Schaltfunktionen offenbart, wobei die Kontaktstrukturen im Siebdruckverfahren aufgedruckt sind.

Der Erfindung liegt daher die Aufgabe zugrunde, eine Tastatur sowie ein Verfahren zu ihrer Herstellung anzugeben, welches sich durch wesentlich günstigere Kosten auszeichnet.

Erfindungsgemäß wird diese Aufgabe durch die Merkmale der Ansprüche 1 und 8 gelöst.

Die erfindungsgemäße Tastatur zum Auslösen von elektrischen Schaltfunktionen besteht im wesentlichen aus einem eine erste elektrische Kontaktstruktur aufweisenden ersten Substrat, einem eine zweite elektrische Kontaktstruktur aufweisenden zweiten Substrat sowie einer Zwischenschicht, welche die beiden Kontaktstrukturen auf Abstand hält und bei Druckausübung an vorgegebenen Bereichen der Tastatur einen Kontakt der beiden Kontaktstrukturen ermöglicht. Die beiden Kontaktstrukturen sind dabei mittels eines Hochdruck, Tiefdruck oder Flachdruckverfahrens aufgedruckt.

Weitere Ausgestaltungen der Erfindung sind Gegenstand der Unteransprüche.

Gemäß einem bevorzugten Ausführungsbeispiel handelt es sich bei der Zwischenschicht um eine Klebstoffschicht, die zweckmäßigerweise partiell aufgebracht ist, wobei die Bereiche, wo bei Druckausübung an den vorgegebenen Bereichen der Tastatur ein Kontakt der beiden Kontaktstrukturen gewährleistet ist, ausgespart sind.

Die elektrischen Kontaktstrukturen bestehen vorteilhafter Weise aus leitfähigen Polymeren. Bei der Herstellung der Tastatur werden die beiden Kontaktstrukturen und/oder die Zwischenschicht mittels Flachdruck, Hochdruck oder Tiefdruck aufgebracht. Besonders vorteilhaft ist es dabei, wenn die Zwischenschicht als Klebstoffschicht aufgebracht wird, wobei die Klebstoffschicht die beiden Substrate fest miteinander verbindet.

Das Aufdrucken der elektrischen Kontaktstrukturen erfolgt vorzugsweise durch das in der DE-A- 10 2004 058 209 beschriebene Verfahren, bei dem das Substrat bzw. der Materialbogen beispielsweise mittels einer Coronabehandlung vorbehandelt wird.

Bei einer Ausgestaltung der Erfindung handelt es sich bei der Zwischenschicht um ein Substrat, insbesondere aus Papier oder Folie.

Gemäß einer besonders vorteilhaften Ausführungsform werden das erste Substrat, das zweite Substrat und die Zwischenschicht durch einen gemeinsamen flexiblen Materialbogen gebildet. Das erste Substrat, das zweite Substrat und die Zwischenschicht sind übereinander liegend angeordnet, wobei die Zwischenschicht an den vorgegebenen Bereichen, zur Gewährleistung eines Kontakts der beiden Kontaktstrukturen ausgespart ist.

Bei der Herstellung der Tastatur wird für das erste Substrat, das zweite Substrat und die Zwischenschicht zweckmäßigerweise ein gemeinsamer flexibler Materialbogen verwendet, wobei der Materialbogen zweckmäßigerweise im Bereich der Zwischenschicht an den vorgegebenen Bereichen, zur Gewährleistung eines Kontakts der beiden Kontaktstrukturen, ausgestanzt wird und der Materialbogen derart gefalzt wird, dass sich die Zwischenschicht zwischen dem ersten und zweiten Substrat befindet.

Weitere Ausgestaltungen und Vorteile der Erfindung werden im folgenden anhand der Beschreibung einige Ausführungsbeispiele und der Zeichnung näher erläutert.

In der Zeichnung zeigen
- Fig. 1: eine dreidimensionale Ansicht des Aufbaus der Tastatur,
- Fig. 2: eine Schnittdarstellung der Tastatur,
- Fig. 3: eine schematische Darstellung des Verfahrensablaufes bei der Herstellung der Tastatur gemäß einem ersten Ausführungsbeispiel,
- Fig. 4a und 4b: schematische Darstellungen verschiedener Möglichkeiten beim Drucken der Tastatur und
- Fig. 5a und 5b: eine schematische Darstellung des Verfahrensablaufes bei der Herstellung der Tastatur gemäß einem zweiten Ausführungsbeispiel,

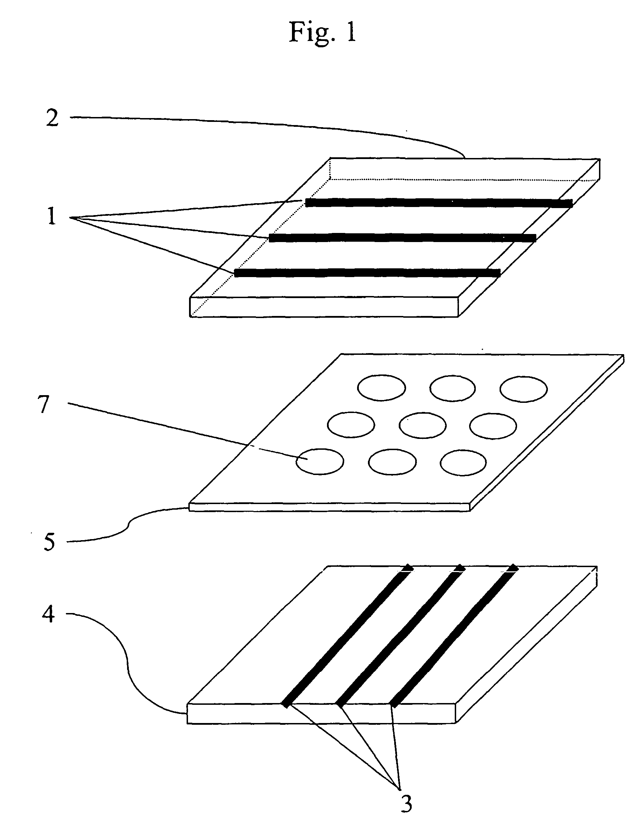

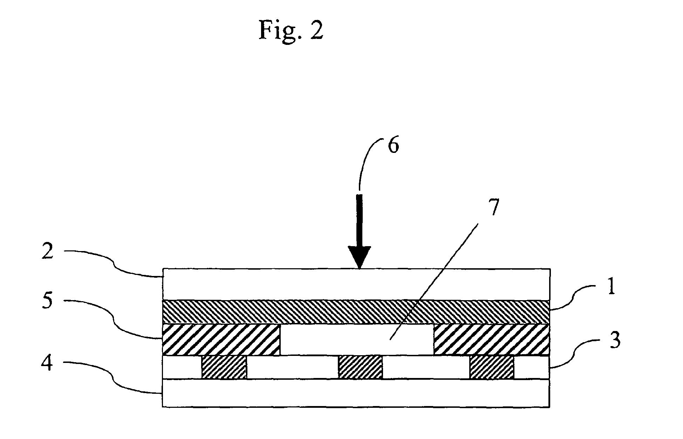

Anhand der Fig. 1 und Fig. 2 wird im folgenden zunächst der Aufbau der Tastatur zum Auslösen von elektrischen Schaltfunktionen näher erläutert. Die Tastatur besteht im wesentlichen aus einem eine erste elektrische Kontaktstruktur 1 aufweisenden ersten Substrat 2, einem eine zweite elektrische Kontaktstruktur 3 aufweisenden zweiten Substrat 4 sowie einer Zwischenschicht 5, welche die beiden Kontaktstrukturen auf Abstand hält und bei Druckausübung (Pfeil 6) an vorgegebenen Bereichen der Tastatur einen Kontakt der beiden Kontaktstrukturen ermöglicht.

Die Zwischenschicht 5, wird beispielsweise durch eine Klebstoffschicht gebildet, die partiell aufgetragen wird und dort, wo bei Druckausübung (Pfeil 6) an den vorgegebenen Bereichen der Tastatur ein Kontakt der beiden Kontaktstrukturen gewährleistet werden soll, ausgespart ist. In der Zeichnung sind diese Aussparungen mit dem Bezugszeichen 7 gekennzeichnet.

Für die beiden Substrat 2, 4 kommen prinzipiell alle möglichen isolierenden und flexiblen Materialien, wie etwa Folien oder Papier, in Betracht. Für die Kontaktstrukturen 1, 3 kommen leitfähige Materialien, wie beispielsweise auf die Druckverfahren angepasste anorganische Systeme (CarbonBlack) oder insbesondere leitfähige Polymere, wie PEDOT PSS, PANI oder dergleichen, zum Einsatz.

Die Herstellung der Tastatur wird erfindungsgemäß dadurch erheblich vereinfacht und kostengünstiger, dass die Kontaktstrukturen mittels eines Massendruckverfahrens (wie Flachdruck, Hochdruck, Tiefdruck, Offsetdruck, Flexodruck) aufgedruckt werden. Auch die Zwischenschicht, bei der es sich beispielsweise um eine Klebstoffschicht handelt, kann mittels eines Massendruckverfahrens oder auch nach dem Prinzip des "Tintenstrahldrucks" aufgebracht werden. Die Zwischenschicht kann aber auch in anderer Art und Weise, insbesondere durch Aufsprühen, aufgetragen werden. Es ist weiterhin denkbar, dass es sich auch bei der Zwischenschicht um ein Substrat, beispielsweise aus Papier oder Folie, handelt.

Handelt es sich bei der Zwischenschicht um eine Klebeschicht, werden die beiden Substrate 2, 4 partiell und kraftschlüssig miteinander verbunden.

Die Zwischenschicht dient gleichzeitig auch als Isolator und gewährleistet durch seine Schichtdicke einen geeigneten Abstand zwischen den beiden Substraten. Die Aussparungen 7 in der Zwischenschicht 5 sind so ausgebildet, dass sich die elektrischen Kontaktstrukturen 1 und 3 ohne äußere Belastung nicht berühren und deshalb keinen elektrischen Kontakt bilden, jedoch bei einer äußeren Druckausübung (Pfeil 6) aufgrund der eintretenden plastischen Verformung des Gesamtgefüges in Berührung kommen und dann einen elektrisch leitenden Kontakt bilden.

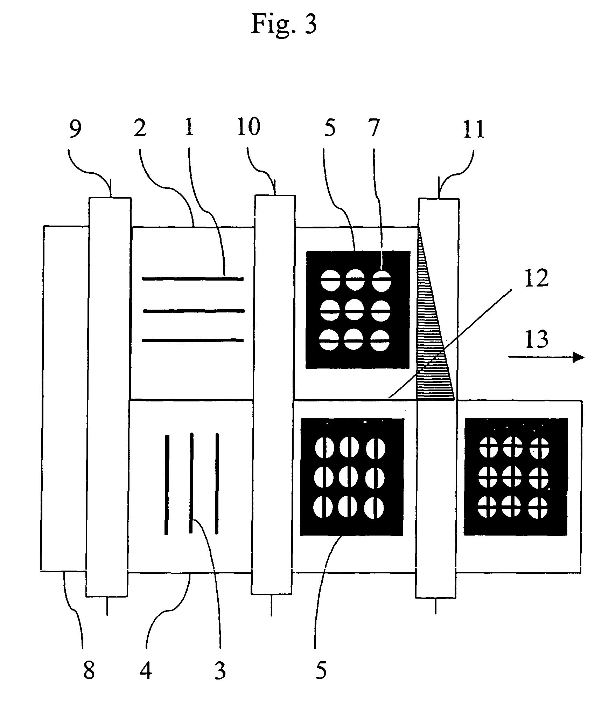

Bei der Herstellung der Tastatur (siehe Fig. 3) werden die beiden Substrate 2, 4 zweckmäßigerweise aus einem gemeinsamen flexiblen Materialbogen 8 gefertigt, der aus einer Folie oder Papier bestehen kann. In einem ersten Arbeitsschritt werden beispielsweise mittels einer Druckwalze 9 die erste und zweite elektrische Kontaktstruktur 1, 3 auf den Materialbogen 8 aufgedruckt. Im nächsten Schritt wird mittels einer Druckwalze 10 die Zwischenschicht 5 über die Kontaktstrukturen gedruckt. Dabei kann es allerdings ausreichend sein, wenn die Zwischenschicht lediglich über eine der beiden Kontaktstrukturen aufgebracht wird. Im dritten Schritt wird der Materialbogen 8 mittels einer Falzeinrichtung 11 um eine Falzkante 12 derart gefalzt, dass die erste Kontaktstruktur mit der Zwischenschicht auf die zweite Kontaktstruktur gefaltet wird, so dass sich der in Fig. 2 dargestellte Aufbau ergibt. Abschließend erfolgt dann lediglich noch der Schneidvorgang, um die einzelnen Tastaturen zu erhalten.

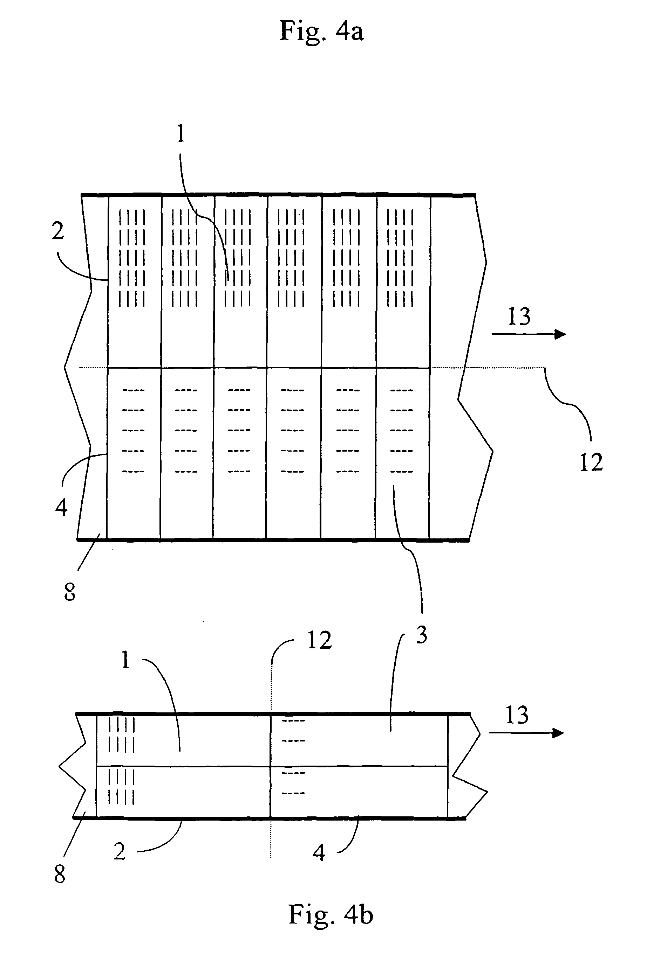

In den Fig. 4a und Fig. 4b sind Ausführungsbeispiele gezeigt, wie die beiden Kontaktstrukturen 1 und 3 auf dem gemeinsamen Materialbogen 8 in Bezug auf die Transportrichtung 13 des Materialbogens aufgedruckt werden können.

Im Ausführungsbeispiel gemäß Fig. 4a werden beide Kontaktstrukturen gleichzeitig gedruckt, so dass sich die spätere Falzkante 12 in Druckrichtung 13 erstreckt. Im zweiten Ausführungsbeispiel gemäß Fig. 4b werden die Kontaktstrukturen 1, 3 hingegen nacheinander gedruckt, so dass die spätere Falzkante 12 quer zur Transportrichtung 13 des Materialsbogens 8 verläuft.

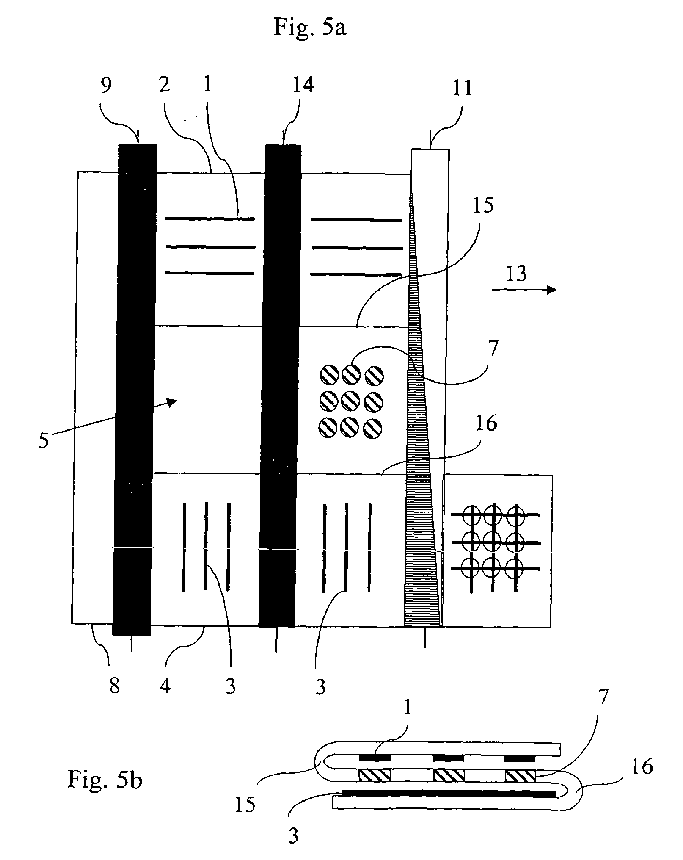

Fig. 5a und 5b zeigen ein zweites Herstellungsverfahren, wobei für das erste Substrat 2, das zweite Substrat 4 und die Zwischenschicht 5 ein gemeinsamer flexiblen Materialbogen 8 verwendet wird. In einem ersten Arbeitsschritt werden beispielsweise mittels einer Druckwalze 9 die erste und zweite elektrische Kontaktstruk-tur 1, 3 auf den Materialbogen 8 aufgedruckt. Im nächsten Arbeitsschritt wird der Materialbogen im Bereich der Zwischenschicht 5 mittels eines Stanzwerkzeuges 14 an den vorgegebenen Bereichen mit Ausstanzungen 7 versehen, die später bei Druckausübung den Kontakt der beiden Kontaktstrukturen gewährleisten.

Im dritten Schritt wird der Materialbogen 8 mittels einer Falzeinrichtung 11 um Falzkanten 15, 16 gemäß Fig. 5b gefalzt, wobei die Zwischenschicht zwischen dem ersten und dem zweiten Substrat zu liegen kommt. Eine ggf. vorher aufgetragene Klebstoffschicht kann den Verbund auf Dauer zusammenhalten.

Die einzelnen Schichten können dauerhaft zusammenhängen oder durch einen Schneidvorgang voneinander getrennt werden.

Die Verwendung von herkömmlicher Druck- und Falztechnik ermöglicht eine äußerst kostengünstige Massenfertigung von Tastaturen.

## Patentansprüche

1. Tastatur zum Auslösen von elektrischen Schaltfunktionen mit einem eine erste elektrische Kontaktstruktur (1) aufweisenden ersten Substrat (2), einem eine zweite elektrische Kontaktstruktur (3) aufweisenden zweiten Substrat (4) sowie einer Zwischenschicht (5), welche die beiden Kontaktstrukturen auf Abstand hält und bei Druckausübung (6) an vorgegebenen Bereichen der Tastatur einen Kontakt der beiden Kontaktstrukturen ermöglicht, **dadurch gekennzeichnet, dass** die Tastatur durch ein Aufdrucken der beiden Kontaktstrukturen mittels eines Hochdruck, Tiefdruck oder Flachdruckverfahrens erhalten ist.

2. Tastatur nach Anspruch 1, **dadurch gekennzeichnet, dass** es sich bei der Zwischenschicht (5) um eine Klebstoffschicht handelt.

3. Tastatur nach Anspruch 1, **dadurch gekennzeichnet, dass** das erste und das zweite Substrat (2, 4) durch einen gemeinsamen flexiblen Materialbogen (8) gebildet werden.

4. Tastatur nach Anspruch 1, **dadurch gekennzeichnet, dass** es sich hei der Zwischenschicht (5) um ein Substrat, insbesondere aus Papier oder Folie, handelt.

5. Tastatur nach Anspruch 1, **dadurch gekennzeichnet, dass** das erste Substrat (2), das zweite Substrat (4) und die Zwischenschicht (5) durch einen gemeinsamen flexiblen Materialbogen (8) gebildet werden und übereinander liegend angeordnet sind, wobei die Zwischenschicht (5) an den vorgegebenen Bereichen, zur Gewährleistung eines Kontakts der beiden Kontaktstrukturen (1, 3) ausgespart ist.

6. Tastatur nach Anspruch 1, **dadurch gekennzeichnet, dass** die Zwischenschicht (5) partiell aufgebracht ist, wobei die Bereiche, wo bei Druckausübung an den vorgegebenen Bereichen der Tastatur ein Kontakt der beiden Kontaktstrukturen (1, 3) gewährleistet ist, ausgespart sind.

7. Tastatur nach Anspruch 1, **dadurch gekennzeichnet, dass** die elektrischen Kontaktstrukturen (1, 3) aus leitfähigen Polymeren bestehen.

8. Verfahren zur Herstellung einer Tastatur zum Auslösen von elektrischen Schaltfunktionen mit einem eine erste elektrische Kontaktstruktur (1) aufweisenden ersten Substrat (2), einem eine zweite elektrische Kontaktstruktur (3) aufweisenden zweiten Substrat (4) sowie einer Zwischenschicht (5), welche die beiden Kontaktstrukturen auf Abstand hält und bei Druckausübung (6) an vorgegebenen Bereichen der Tastatur einen Kontakt der beiden Kontaktstrukturen an vorgegebenen Stellen ermöglicht, **dadurch gekennzeichnet, dass** die beiden Kontaktstrukturen mittels eines Hochdruck, Tiefdruck oder Flachdruckverfahrens aufgedruckt werden.

9. Verfahren nach Anspruch 8, **dadurch gekennzeichnet, dass** die Zwischenschicht (5) aufgedruckt wird.

10. Verfahren nach Anspruch 8, **dadurch gekennzeichnet, dass** die Zwischenschicht (5) als Klebstoffschicht aufgebracht wird, wobei die Klebstoffschicht die beiden Substrate (2, 4) fest miteinander verbindet.

11. Verfahren nach Anspruch 8, **dadurch gekennzeichnet, dass** zunächst die beiden Kontaktstrukturen (1, 3) auf einen gemeinsamen Materialbogen (8) aufgedruckt werden, anschließend im Bereich wenigstens einer der beiden Kontaktstrukturen die Zwischenschicht aufgebracht wird und die beiden Kontaktstrukturen mit der Zwischenschicht übereinander gefaltet werden.

12. Verfahren nach Anspruch 8, **dadurch gekennzeichnet, dass** für das erste Substrat (2), das zweite Substrat (4) und die Zwischenschicht (5) ein gemeinsamer flexibler Materialbogen (8) verwendet wird.

13. Verfahren nach Anspruch 8, **dadurch gekennzeichnet, dass** für das erste Substrat (2), das zweite Substrat (4) und die Zwischenschicht (5) ein gemeinsamer flexibler Materialbogen (8) verwendet wird, der Materialbogen im Bereich der Zwischenschicht an den vorgegebenen Bereichen, zur Gewährleistung eines Kontakts der beiden Kontaktstrukturen (1, 3), ausgestanzt wird und der Materialbogen derart gefalzt wird, dass sich die Zwischenschicht zwischen dem ersten und zweiten Substrat befindet.

## Claims

1. A keyboard for activating electrical switching functions, having a first substrate (2) comprising a first electrical contact structure (1), a second substrate (4) comprising a second electrical contact structure (3) and an intermediate layer (5) that holds the two contact structures at a distance from one another and, when pressure (6) is exerted at predetermined areas of the keyboard, allows a contacting of the two contact structures, **characterised in that** the keyboard is obtained by an imprinting of the two contact structures by means of a relief printing, intaglio printing or planographic printing method.

2. A keyboard according to Claim 1, **characterised in that** the intermediate layer (5) is an adhesive layer.

3. A keyboard according to Claim 1, **characterised in that** the first and the second substrate (2, 4) are formed by a common flexible material sheet (8).

4. A keyboard according to Claim 1, **characterised in that** the intermediate layer (5) is a substrate, in particular of paper or film.

5. A keyboard according to Claim 1, **characterised in that** the first substrate (2), the second substrate (4) and the intermediate layer (5) are formed by a common flexible material sheet (8) and are arranged lying one upon each other, the intermediate layer (5) being left open at the predetermined areas to ensure contacting of the two contact structures (1, 3).

6. A keyboard according to Claim 1, **characterised in that** the intermediate layer (5) is partially applied, wherein the regions in which a contacting of the two contact structures (1, 3) is ensured when pressure is exerted at the predetermined areas of the keyboard, are left open.

7. A keyboard according to Claim 1, **characterised in that** the electrical contact structures (1, 3) comprise conductive polymers.

8. A method for producing a keyboard for activating electrical switching functions, having a first substrate (2) comprising a first electrical contact structure (1), a second substrate (4) comprising a second electrical contact structure (3) and an intermediate layer (5) that holds the two contact structures at a distance from one another and, when pressure (6) is exerted at predetermined areas of the keyboard, allows a contacting of the two contact structures at predetermined points, **characterised in that** the two contact structures are imprinted by means of a relief printing, intaglio printing or planographic printing method.

9. A method according to Claim 8, **characterised in that** the intermediate layer (5) is imprinted.

10. A method according to Claim 8, **characterised in that** the intermediate layer (5) is applied as an adhesive layer, the adhesive layer connecting the two substrates (2, 4) firmly to one another.

11. A method according to Claim 8, **characterised in that** first of all the two contact structures (1, 3) are imprinted on a common material sheet (8), subsequently in the region of at least one of the two contact structures the intermediate layer is applied and the two contact structures with the intermediate layer are folded over one another.

12. A method according to Claim 8, **characterised in that** a common flexible material sheet (8) is used for the first substrate (2), the second substrate (4) and the intermediate layer (5).

13. A method according to Claim 8, **characterised in that** a common flexible material sheet (8) is used for the first substrate (2), the second substrate (4) and the intermediate layer (5), the material sheet is punched out in the region of the intermediate layer at the predetermined areas to ensure a contacting of the two contact structures (1, 3) and the material sheet is folded in such a way that the intermediate layer is located between the first and second substrate.

## Revendications

1. Clavier pour déclencher des fonctions de commutation électriques avec un premier substrat (2) présentant une première structure de contact électrique (1), un deuxième substrat (4) présentant une deuxième structure de contact électrique (3) ainsi qu'une couche intermédiaire (5), qui maintient à distance les deux structures de contact et qui, lors d'une exertion de pression (6) à des zones prédéfinies du clavier, permet un contact des deux structures de contact, **caractérisé en ce que** le clavier est obtenu par une impression des deux structures de contact au moyen d'un procédé d'impression en relief, d'un procédé d'impression en creux ou d'un procédé d'impression à plat.

2. Clavier selon la revendication 1, **caractérisé en ce que** dans le cas de la couche intermédiaire (5), il s'agit d'une couche de colle.

3. Clavier selon la revendication 1, **caractérisé en ce que** le premier et le deuxième substrat (2, 4) sont formés par une feuille de matériau flexible commune (8).

4. Clavier selon la revendication 1, **caractérisé en ce que** dans le cas de la couche intermédiaire (5), il s'agit d'un substrat, en particulier en papier ou en feuille.

5. Clavier selon la revendication 1, **caractérisé en ce que** le premier substrat (2), le deuxième substrat (4) et la couche intermédiaire (5) sont formés par une feuille de matériau flexible commune (8) et sont disposés les uns au-dessus des autres, où la couche intermédiaire (5) est évidée aux zones prédéfinies, pour assurer un contact des deux structures de contact (1, 3).

6. Clavier selon la revendication 1, **caractérisé en ce que** la couche intermédiaire (5) est appliquée partiellement, où les zones, où lors de l'exertion d'une pression aux zones prédéfinies du clavier, un contact des deux structures de contact (1, 3) est assurée, sont évidées.

7. Clavier selon la revendication 1, **caractérisé en ce que** les structures de contact électriques (1, 3) sont réalisées en des polymères conducteurs.

8. Procédé de fabrication d'un clavier pour déclencher des fonctions de commutation électriques avec un premier substrat (2) présentant une première structure de contact électrique (1), un deuxième substrat (4) présentant une deuxième structure de contact électrique (3) et avec une couche intermédiaire (5) qui maintient à distance les deux structures de contact et qui, lors de l'exertion d'une pression (6) aux zones prédéfinies du clavier, permet un contact des deux structures de contact aux emplacements prédéfinis,**caractérisé en ce que** les deux structures de contact sont imprimées au moyen d'un procédé d'impression en relief, d'un procédé d'impression en creux ou d'un procédé d'impression à plat.

9. Procédé selon la revendication 8, **caractérisé en ce que** la couche intermédiaire (5) est imprimée.

10. Procédé selon la revendication 8, **caractérisé en ce que** la couche intermédiaire (5) est appliquée comme couche de colle, où la couche de colle relie solidement les deux substrats (2, 4).

11. Procédé selon la revendication 8, **caractérisé en ce que** tout d'abord les deux structures de contact (1, 3) sont imprimées sur une feuille de matériau commune (8), ensuite dans la zone au moins d'une des deux structures de contact, la couche intermédiaire est appliquée, et les deux structures de contact avec la couche intermédiaire sont pliées les unes au-dessus des autres.

12. Procédé selon la revendication 8, **caractérisé en ce qu'**une feuille de matériau flexible commune (8) est utilisée pour le premier substrat (2), le deuxième substrat (4) et la couche intermédiaire (5).

13. Procédé selon la revendication 8, **caractérisé en ce que** pour le premier substrat (2), le deuxième substrat (4) et la couche intermédiaire (5), une feuille de matériau flexible commune (8) est utilisée, la feuille de matériau est découpée dans la zone de la couche intermédiaire aux zones prédéfinies, pour assurer un contact des deux structures de contact (1, 3), et la feuille de matériau est pliée de façon que la couche intermédiaire se trouve entre le premier et le deuxième substrat.
